# FASCICULE DE BREVET EUROPEEN

(11) **EP 4 587 393 B1**
(45) Date de publication et mention de la délivrance du brevet: **15.07.2026**
(21) Numéro de dépôt: 23769239.7
(22) Date de dépôt: 13.09.2023
(51) Int. Cl.: C03B 5/03, C03B 5/04, C03B 5/235, C03B 5/20, C03B 5/00, C03C 1/00

(54) **PROCÉDÉ DE FABRICATION DE VERRE, FOUR VERRIER HYBRIDE POUR LA MISE EN OEUVRE DU PROCÉDÉ DE FABRICATION**
VERFAHREN ZUR HERSTELLUNG VON GLAS, HYBRIDGLASOFEN ZUR DURCHFÜHRUNG DES HERSTELLUNGSVERFAHRENS
METHOD FOR MANUFACTURING GLASS, AND HYDBRID GLASS FURNACE FOR IMPLEMENTING THE MANUFACTURING METHOD

(30) Priorité: 14.09.2022 FR 2209219
(43) Date de publication de la demande: 23.07.2025
(73) Titulaire: SAINT-GOBAIN ISOVER, 93300 Courbevoie (FR)
(72) Inventeur: GUILLET, Thibault, 19162 SOLLENTUNA (SE); CLATOT, Richard, 93300 AUBERVILLIERS (FR); GIMENEZ, Guillaume, 93300 AUBERVILLIERS (FR)
(74) Mandataire: Saint-Gobain Recherche
(86) Numéro de dépôt international: PCT/EP2023/075200
(87) Numéro de publication internationale: WO 2024/056763

(56) Documents cités:
- US-A- 4 184 863
- US-A- 4 584 007
- US-A- 5 765 489

## Description

### Technique antérieure

La présente invention appartient au domaine général de la fabrication de verre. Elle concerne plus particulièrement un procédé de fabrication comportant une étape de fusion de matières vitrifiables de sorte à pouvoir fabriquer du verre. Elle concerne également un four verrier hybride configuré pour mettre en œuvre ledit procédé de fabrication. L'invention trouve une application particulièrement avantageuse, bien que nullement limitative, dans le cas où le verre destiné à être produit est un verre borosilicaté.

Dans la présente description, on comprend par « matières vitrifiables » tous les matériaux, minerais naturels ou produits synthétisés, matériaux issus de recyclage du type calcin etc.., qui peuvent entrer dans la composition venant alimenter un four verrier destiné à la fabrication de verre.

De même, on comprend par « verre » le verre au sens large, c'est-à-dire englobant tout matériau à matrice vitreuse, vitrocéramique ou céramique.

En outre, le terme de « fabrication » comprend l'étape de fusion indispensable des matières vitrifiables et, le cas échéant, toutes les étapes ultérieures/complémentaires visant à affiner/conditionner le verre en fusion en vue de sa mise en forme définitive, notamment sous forme de verre plat (vitrages), de verre creux (flacons, bouteilles), de verre sous forme de laine minérale (en particulier laine de roche ou laine de verre) utilisée pour ses propriétés d'isolation thermique ou phonique, ou même éventuellement de verre sous forme de fils dits textile utilisés dans le renforcement.

On connaît de l'état de la technique différents exemples de conception de fours pour réaliser la fusion de matières vitrifiables, de sorte à obtenir un bain de matières fondues, encore couramment appelé « mélange vitrifiable » ou bien « composition », à partir duquel du verre peut être fabriqué. Plus particulièrement, et notamment pour faire face à l'enjeu écologique de réduction des émissions de dioxyde de carbone (CO₂), il est connu d'utiliser un four à flammes (via des brûleurs) utilisant un chauffage d'appoint électrique (via des électrodes noyées dans le bain). Un four selon cette conception combine ainsi plusieurs énergies, respectivement une énergie de combustion, par exemple d'origine fossile (généralement du gaz), et une énergie électrique. Un tel four est aussi appelé four « hybride » verrier.

Une réalisation conventionnelle de four verrier hybride comporte une cuve à voûte chaude, cette cuve étant partagée (virtuellement ou bien matériellement au moyen d'une paroi verticale adaptée) en deux zones de chauffe. Par « zones de chauffe », il est fait référence à des parties de la cuve, réparties d'amont en aval en référence au sens d'écoulement des matières vitrifiables introduites dans la cuve, et différant entre elles au regard de la proportion d'énergie de combustion (respectivement d'énergie électrique) qui y est utilisée pour réaliser la chauffe des matières vitrifiables.

De manière plus spécifique, la conception actuelle d'une cuve de four verrier hybride consiste à avoir une zone de chauffe amont destinée à la fusion des matières vitrifiables et majoritairement alimentée en énergie électrique, ainsi qu'une zone de chauffe avale davantage destinée à l'affinage de la composition verrière (i.e. amélioration de la qualité du verre de sorte qu'il comporte le moins d'infondus possible, voire le moins de bulles) et majoritairement alimentée en énergie de combustion.

Une telle conception permet d'optimiser l'efficacité de chauffe (ou transfert thermique) dans chacune des zones de chauffe amont et avale du four hybride verrier. En effet, l'énergie électrique est en outre privilégiée dans la zone de chauffe amont destinée à la fusion des matières vitrifiables en raison du fait qu'environ 99% de la puissance est transmise par les électrodes au bain de verre. Par comparaison, la puissance transmise aux matières vitrifiables par des brûleurs dans la zone de chauffe amont est bien moindre, de l'ordre de 60%, variant notamment selon le mélange combustible / comburant, en particulier la part d'oxygène et/ou la mise en œuvre d'un préchauffage. C'est l'une des raisons pour lesquelles, une telle conception de four hybride verrier est aujourd'hui devenue la référence pour la fabrication de verre.

US4184863 A fait référence à un procédé de fusion de matières vitrifiables dans un four hybride. Dans une première zone de chauffe il y a des brûleurs et la deuxième zone de chauffe comprend des électrodes immergées dans le bain de matières fondues. La part d'énergie de combustion utilisée pour fondre des matières vitrifiables dans la première zone n'est pas connue, et la part d'énergie électrique utilisée pour fondre des matières vitrifiables dans la deuxième zone est 100%.

US5765489 A enseigne un procédé de traitement des résidus d'incinérateurs de déchets (par exemple, des scories) contenant jusqu'à 5 % de composants organiques non brûlés, à l'aide d'un brûleur dans une atmosphère oxydante dans la première partie d'un four et d'électrodes dans la deuxième partie du four, les métaux lourds étant séparés au fond. Les granulés de scories purifiés obtenus peuvent être utilisés dans l'industrie du bâtiment.

US4584007 A enseigne d'utiliser plusieurs moyens de chauffe dans une zone.

En fonctionnement, l'apparition d'un phénomène dit de « moussage » en surface du bain de matières fondues est classiquement observé dans un four verrier. La présence de cette mousse résulte notamment du contenu des matières vitrifiables. En effet, ces dernières contiennent typiquement, pour des raisons de recyclage, des matériaux usagés comme par exemple du calcin ménager ou plat et/ou de la laine de verre (exemple : déchets de laine de verre provenant d'une ligne de production ou bien encore de produits en fin de vie). Ces matériaux usagés contribuent cependant à augmenter la proportion de chaines carbonées (pollutions organiques sur le calcin bouteille par exemple, ou liant dans la laine minérale) ainsi que de sulfate dans le bain. Or, notamment au voisinage d'électrodes mais non exclusivement le phénomène de moussage étant thermo-activé, le sulfate se désolubilise en réagissant avec le carbone rapporté, générant ainsi la mousse en question.

Les inventeurs ont mis en évidence que la mousse forme alors un écran thermique particulièrement préjudiciable à l'efficacité générale de chauffe d'un tel four hybride verrier pour les raisons détaillées ci-après.

Dans la zone de chauffe amont, où l'apparition de la mousse est favorisée en raison de l'utilisation prédominante d'énergie électrique pour chauffer, la mousse forme un écran thermique à l'interface entre le bain de verre et les matières vitrifiables flottantes non encore fondues. En conséquence, cet écran thermique limite le transfert de chaleur générée par les électrodes vers les matières vitrifiables nouvellement introduites en surface du bain de verre. La fusion de ces dernières dans la cuve n'est donc réalisée que de manière partielle, ce qui complexifie la gestion du tonnage et accroit le risque de débordement du bain en dehors de la cuve.

Dans la zone de chauffe avale, de la mousse peut également être présente. Celle-ci peut résulter d'un transfert de mousse depuis la zone amont et/ou de la présence d'infondus issus de la zone de chauffe amont qui entretiennent le phénomène de moussage et/ou des hautes températures atteintes dans cette zone avale. Dans la mesure où l'énergie de combustion y est utilisée de manière prépondérante, le problème du transfert de chaleur des brûleurs au bain y est donc prégnant. En effet, la mousse forme alors un écran thermique entre les brûleurs et le bain de verre destiné à être chauffé et affiné dans ladite zone de chauffe avale.

On donne ci-après un exemple nullement limitatif pour illustrer les conséquences de l'écrantage résultant de la présence de mousse, laquelle mousse forme ledit écran thermique. Dans le cas de l'utilisation de brûleurs aériens, pour une puissance apportée de 200 kW/m², on estime qu'environ 40 kW/m² (plus ou moins +/- 10 kW/m²) sera transférée au bain de verre en présence de mousse formant ledit écran thermique tandis que celle-ci est par comparaison d'environ 120 kW/m² (plus ou moins +/- 10 kW/m²) pour les matières vitrifiables présentes en surface du bain de verre. Dans le cas de l'utilisation d'électrodes, pour une puissance apportée de 200 kW/m², on sait qu'environ 198 kW/m² sera transférée au bain de verre (ce qui est à relier à la conception précitée du four hybride verrier) mais en revanche on estime qu'environ 40 kW/m² (plus ou moins +/- 10 kW/m²) seulement sera transférée aux matières vitrifiables à fondre présentes en surface du bain et cela en raison là encore de l'écran thermique formé par la mousse.

Ainsi, le fait de limiter l'efficacité générale de chauffe du four hybride implique que le phénomène de moussage est un frein à l'utilisation de produits à base de calcin et/ou de laine de verre en tant que matières vitrifiables, c'est à dire au recyclage. Autrement dit, le phénomène de moussage limite les capacités de recyclage d'un four hybride et induit une surconsommation importante d'énergie, voire une augmentation de température participant à l'usure prématurée des réfractaires du four.

Les tentatives actuelles pour pallier ce problème de moussage sont loin d'être optimales dans la mesure où elles consistent notamment en la mise en œuvre de contremesures de type ajout d'oxydants solides tels que du nitrate de sodium (NaNO₃) et de l'oxyde de manganèse (MnO₂). En effet, l'utilisation d'oxydants est elle-même limitée en particulier par les émissions de NOx et le besoin de maintenir une cible verrière notamment biosoluble. Par conséquent, une augmentation de la quantité d'oxydants n'est pas envisageable de sorte que le recyclage dans les matières vitrifiables s'en trouve de facto limité.

Il convient de noter que le phénomène de moussage décrit ci-avant, bien que présent quelle que soit la composition des matières vitrifiables, est plus particulièrement problématique (en termes de quantité de mousse générée) lorsque le verre destiné à être fabriqué est un verre borosilicaté.

### Exposé de l'invention

La présente invention a pour objectif de remédier à tout ou partie des inconvénients de l'art antérieur, notamment ceux exposés ci-avant, en proposant une solution qui permette de maximiser l'efficacité de chauffe (ou transfert thermique) de chacune des énergies utilisées (combustion, électrique) ainsi que la capacité de recyclage au sein d'un four hybride.

A cet effet, et selon un premier aspect, l'invention concerne un procédé de fabrication de verre comportant une étape de fusion de matières vitrifiables destinées à la fabrication dudit verre, lesdites matières vitrifiables contenant une proportion de matière organique carbonée comprise entre 0,5% et 10%, dans lequel l'étape de fusion des matières vitrifiables est mise en œuvre au moyen d'un four verrier hybride comportant une cuve à voûte chaude, ladite cuve comportant d'amont en aval :
- une première zone de chauffe comprenant des moyens de chauffe par combustion,
- une deuxième zone de chauffe comprenant des électrodes immergées dans le bain de matières fondues,
ladite étape de fusion étant mise en œuvre de sorte que la part d'énergie de combustion utilisée pour fondre des matières vitrifiables dans la première zone est d'au moins 50%, et la part d'énergie électrique utilisée pour fondre des matières vitrifiables dans la deuxième zone est d'au moins 50 % en priorisant l'utilisation de l'énergie de combustion dans la première zone de chauffe afin de limiter le phénomène de moussage dans ladite première zone de chauffe et, inversement, l'utilisation de l'énergie électrique dans la deuxième zone de chauffe de manière à maximiser l'efficacité de chauffe de chacune desdites énergies utilisées dans le four.

Avantageusement, la priorisation de l'énergie de combustion dans la première zone de chauffe et, inversement, de l'énergie électrique dans la deuxième zone de chauffe lors de l'étape de fusion est déterminé en fonction de proportion de matière organique carbonée contenue dans les matières vitrifiables.

Selon une caractéristique importante, le procédé de fabrication de verre selon l'invention implique pour l'homme de l'art un changement de paradigme dans la conception du four verrier destiné à sa mise en œuvre. En effet et tel que décrit auparavant, la conception du four hybride verrier selon l'état de la technique a posé le principe d'une utilisation d'énergie électrique dans la zone de chauffe amont et d'une énergie de combustion dans la zone de chauffe avale en raison de l'efficacité du transfert thermique respectivement obtenu.

Ainsi, l'homme de l'art est-il dissuadé de modifier une telle conception de four, de surcroît lorsque la mise en œuvre de l'invention le conduit à une utilisation des énergies électrique et de combustion dans les zones de chauffe de la cuve qui est va précisément à l'encontre en inversant l'énergie majoritaire dans chacune, c'est-à-dire qui n'est rien de moins que l'opposé.

Le procédé de fabrication selon l'invention permet donc de prioriser l'utilisation de l'énergie de combustion dans la première zone de chauffe, et, inversement, de prioriser l'utilisation de l'énergie électrique dans la deuxième zone de chauffe.

En procédant ainsi, on diminue grandement le risque que le sulfate contenu dans les matières vitrifiables interagisse avec les chaines carbonées également contenues dans les matières vitrifiables, en évitant la présence de points localement très chauds au sein du verre. Dit encore autrement, procéder de cette manière permet de limiter avantageusement le phénomène de moussage dans la première zone de chauffe.

De plus, si de la mousse vient à se former, le moyen de chauffe majoritaire (brûleurs ou électrodes) de chaque zone ne se trouve alors pas séparé de ce qu'il doit chauffer par une couche de mousse formant un écran thermique, soit l'écrantage ou écran thermique présent auparavant dans l'art antérieur.

En conséquence, l'invention permet de maximiser l'efficacité de chauffe ou transfert thermique de chacune des énergies utilisées dans le four. En effet, l'apparition de mousse étant fortement limitée dans la première zone de chauffe, le problème d'une mauvaise transmission de chaleur entre le bain et les matières vitrifiables l'est également, ce qui favorise grandement la fusion des matières vitrifiables introduites dans la cuve.

Dans la deuxième zone de chauffe, là où l'énergie utilisée est majoritairement électrique, le bain de verre ne contient alors quasiment plus de matières vitrifiables carbonées et de sulfate, si bien que le chauffage électrique a un rendement élevé sans risque de mauvais transfert de chaleur.

Qui plus est, si un résidu de mousse est amené à se former en surface du bain dans la deuxième zone de chauffe, ce dernier n'aura aucun effet délétère sur la production du verre. Au contraire, ce résidu de mousse forme alors un écran thermique vis-à-vis de la chaleur générée sous la surface du bain par les électrodes, contribuant à la bonne isolation thermique dudit bain. L'écran thermique formé par la mousse qui était auparavant un inconvénient dans la deuxième zone de chauffe avec des brûleurs devient à l'inverse avantageux avec des électrodes.

Dans des modes particuliers de mise en œuvre, la part d'énergie de combustion utilisée pour fondre des matières vitrifiables dans la première zone est d'au moins 60%, et la part d'énergie électrique utilisée pour fondre des matières vitrifiables dans la deuxième zone est d'au moins 60 %.

Dans des modes particuliers de mise en œuvre, la part d'énergie de combustion utilisée dans la première zone est d'au moins 70%.

Dans des modes particuliers de mise en œuvre, l'énergie de fusion utilisée dans la première zone est uniquement une énergie de combustion.

Dans des modes particuliers de mise en œuvre, la première zone de chauffe comporte également des électrodes immergées dans le bain de matières fondues, l'étape de fusion étant mis en œuvre de sorte que la part d'énergie électrique utilisée dans la première zone permette d'y maintenir la température du bain au-dessus d'une température donnée, par exemple une température de dévitrification du verre.

Dans des modes particuliers de mise en œuvre, la part d'énergie électrique utilisée dans la deuxième zone est d'au moins 70%.

Dans des modes particuliers de mise en œuvre, l'énergie de fusion utilisée dans la deuxième zone est uniquement une énergie électrique.

Dans des modes particuliers de mise en œuvre, la deuxième zone de chauffe comporte également des moyens de chauffe par combustion, l'étape de fusion étant mise en œuvre de sorte que la part d'énergie de combustion utilisée dans la deuxième zone permette d'y maintenir la température de la voûte au-dessus d'une température donnée, par exemple une température de condensation du borate de soude.

Dans des modes particuliers de mise en œuvre, la part d'énergie de combustion utilisée dans la première zone et la part d'énergie électrique utilisée dans la deuxième zone sont égales.

Dans des modes particuliers de mise en œuvre, la part d'énergie de combustion utilisée dans la première zone et la part d'énergie électrique utilisée dans la deuxième zone sont différentes, l'une étant alors supérieure à l'autre ou inversement.

Dans des modes particuliers de mise en œuvre, l'énergie de combustion dans la première zone et/ou dans la deuxième zone est obtenue par combustion d'hydrogène.

Dans des modes particuliers de mise en œuvre, les matières vitrifiables sont choisies pour permettre la fabrication de verre borosilicaté.

Dans des modes particuliers de mise en œuvre, la proportion de matière organique carbonée contenue dans les matières vitrifiables, inférieure ou égale à 10%, est comprise entre 0,75% et 10%, plus préférentiellement entre 1% et 10%, encore plus préférentiellement entre 2% et 10%.

Dans des modes particuliers de mise en œuvre, les matières vitrifiables comportent des matières recyclées, comme par exemple du calcin, par exemple dans une proportion inférieure ou égale à 90%, et/ou de la laine minérale dans une proportion pouvant par exemple aller jusqu'à 100%.

Dans des modes particuliers de mise en œuvre, les fumées de combustion produites dans la première zone de chauffe sont évacuées vers la deuxième zone de chauffe jusqu'à une cheminée d'évacuation agencée en aval dans ladite deuxième zone de chauffe de manière à permettre de maintenir grâce auxdites fumées la température de la voûte dans ladite deuxième zone de chauffe au-dessus d'une température donnée, notamment une température de condensation du borate de soude.

Selon un deuxième aspect, l'invention concerne un four verrier hybride configuré pour mettre en œuvre un procédé de fabrication de verre, ledit four comportant une unité de commande pour piloter respectivement au moins les moyens de chauffe par combustion dans la première zone de chauffe et les électrodes immergées dans le bain de matières fondues dans la deuxième zone de chauffe en fonction de la proportion de matière organique carbonée contenue dans les matières vitrifiables, en priorisant l'utilisation de l'énergie de combustion dans la première zone de chauffe afin de limiter le phénomène de moussage dans ladite première zone de chauffe et, inversement, l'utilisation de l'énergie électrique dans la deuxième zone de chauffe, de manière à maximiser l'efficacité de chauffe de chacune desdites énergies utilisées dans le four.

Dans des modes particuliers de réalisation, le four comporte une cloison verticale configurée pour :
- bloquer, au niveau de la surface du bain de matières fondues, la circulation de matières fondues entre les première et deuxième zones,
- laisser circuler, au niveau de la sole du four, les matières fondues entre les première et deuxième zones.

La capacité de la cloison (du fait de sa hauteur adaptée) à bloquer, au niveau de la surface du bain de fusion, la circulation de matières fondues entre les zones permet avantageusement d'éviter que de la mousse apparue dans la deuxième zone de chauffe puisse migrer vers la première zone de chauffe. Autrement dit, la présence de la cloison verticale permet d'optimiser encore plus l'efficacité de chauffe du four hybride.

Dans des modes particuliers de réalisation, la hauteur de voûte dans la deuxième zone de chauffe est inférieure à la hauteur de voûte dans la première zone de chauffe.

Dans des modes particuliers de réalisation, la hauteur de bain dans la deuxième zone de chauffe est inférieure à la hauteur de bain dans la première zone de chauffe.

Dans des modes particuliers de réalisation, le four comporte en outre une cheminée d'évacuation qui, agencée dans une partie avale de la deuxième zone de chauffe, est configurée pour évacuer des fumées de combustion produites dans la première zone de chauffe vers la deuxième zone de chauffe.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente schématiquement un mode particulier de réalisation d'un four verrier hybride selon l'invention ;
- la figure 2 représente schématiquement un autre mode de réalisation d'un four verrier hybride selon l'invention ;
- la figure 3 représente schématiquement encore un autre mode de réalisation d'un four verrier hybride selon l'invention ;
- la figure 4 représente schématiquement encore un autre mode de réalisation d'un four verrier hybride selon l'invention ;
- la figure 5 représente schématiquement encore un autre mode de réalisation d'un four verrier hybride selon l'invention.

### Description de modes de réalisation

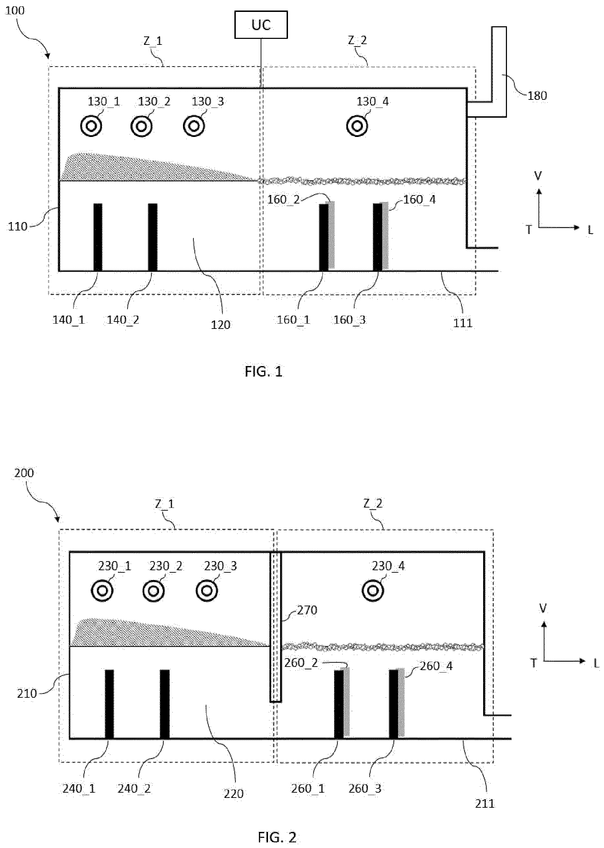

La figure 1 représente schématiquement, dans son environnement, un mode particulier de réalisation d'un four verrier 100 selon l'invention. Plus particulièrement, sur la figure 1, le four 100 y est représenté selon une vue de côté.

Dans la suite de la description, on adoptera à titre non limitatif les orientations longitudinale, verticale et transversale en référence au trièdre (L, V, T) représenté sur les figures.

Par convention, les termes « amont » et « aval », ainsi que « gauche » et « droit », sont utilisés en référence à l'orientation longitudinale. Les termes « supérieur » et « inférieur » ou « haut » et « bas » sont quant à eux utilisés en référence à l'orientation verticale.

Plus particulièrement, dans la présente description, les termes « amont » et « aval » correspondent au sens d'écoulement du verre dans le four, le verre s'écoulant de l'amont vers l'aval, ou, dit encore autrement, de la gauche vers la droite au regard de la représentation du four 100 sur la figure 1.

Conformément à l'invention, le four 100 comporte une cuve 110 à voûte chaude, typiquement réalisée en matériau réfractaire, par exemple en Alumine Zircone Silice ou en chrome.

La notion de « voûte chaude » dans un four destiné à la fabrication du verre est bien connue de l'homme de l'art, si bien qu'elle n'est pas davantage explicitée ici. On rappelle tout au plus que selon cette conception, l'introduction de matières vitrifiables dans la cuve 110 est réalisée par le côté de celle-ci (i.e. suivant l'orientation longitudinale), typiquement par un dispositif d'enfournement (non représenté sur les figures) encore appelé « enfourneuse ».

Dans le mode de réalisation de la figure 1, la cuve 110 présente une paroi inférieure 111 formant la sole du four 100 et s'étendant horizontalement. Rien n'exclut cependant de considérer, suivant d'autres exemples, une paroi inférieure inclinée par rapport à l'horizontale, par exemple sous la forme d'un cône pointant vers le bas ou bien d'un plan incliné, de sorte à favoriser l'entrainement vers le bas de la cuve 110 de matière vitrifiable fondue en début de fusion.

Le four 100 est configuré pour réaliser la fusion des matières vitrifiables introduites dans la cuve 110, de sorte à former un bain 120 de matière fondue vitrifiable. La matière ainsi fondue est destinée à la fabrication de verre, le four 100 étant intégré, à cet effet, à une installation de fabrication de verre comportant, dans des zones autres que celle où est implémenté le four 100, différents dispositifs (non représentés sur les figures) aptes à mettre en œuvre des étapes d'affinage et/ou d'homogénéisation et/ou de conditionnement thermique et/ou de mise en forme finale du verre. De telles étapes sont bien connues de l'homme de l'art, si bien qu'elles ne sont pas décrites plus avant ici.

Pour la suite de la description, on considère de manière nullement limitative que le verre destiné à être fabriqué à partir de la matière fondue dans le four 100 est un verre borosilicaté. Le fait de considérer la fabrication d'un tel verre ne constitue toutefois qu'une variante d'implémentation de l'invention. Aussi, et de manière générale, aucune limitation n'est attachée au type de verre destiné à être fabriqué au moyen de la matière fondue dans le four 100 selon l'invention.

Il est à noter que la composition des matières vitrifiables permettant de fabriquer un verre de type borosilicaté est bien connue de l'homme de l'art et donc non décrite en détail ici. Bien entendu, une telle observation s'applique encore pour tous les autres types de verre pouvant être fabriqués selon l'invention. En outre, les aspects liés à la proportion de matière organique carbonée pouvant être contenue dans les matières vitrifiables utilisées sont décrits plus en détail ultérieurement.

Conformément à l'invention, le four verrier 100 est de type hybride. Autrement dit, la fusion des matières vitrifiables dans la cuve 110, pour réaliser le bain 120, s'effectue en utilisant deux sources d'énergie différentes, respectivement de l'énergie de combustion et de l'énergie électrique. L'utilisation de chacune de ces énergies s'effectue grâce à des moyens de chauffe adaptés de type connu en soi, à savoir :
- des brûleurs aériens agencés entre la voûte du four 110 et la surface du bain 120 pour ce qui est de l'énergie de combustion, et
- des électrodes, réalisées en matériau réfractaire, par exemple en molybdène, et noyées dans le bain 120 pour ce qui est de l'énergie électrique.

La combustion peut être obtenue de manière connue en associant différents types de combustible et de comburant. Ainsi, on utilise généralement l'oxygène présent dans l'air comme comburant, lequel air peut être enrichi en oxygène afin d'obtenir un air suroxygéné. De l'oxygène pur peut même être utilisé en tant que comburant dans le cas particulier d'une oxycombustion.

Pour ce qui est de la combustion, le combustible utilisé est généralement du gaz naturel, voire possiblement d'autres produits fossiles, comme par exemple des produits pétroliers tels que du fioul.

Le fait d'envisager un combustible fossile a bien entendu des conséquences directes dans le bilan carbone de la fabrication du verre, notamment au travers des émissions de dioxyde de carbone (CO₂) générées par la combustion. Aussi, pour améliorer ce bilan carbone, il est possible d'utiliser, en alternative à un combustible fossile, un biocombustible (en anglais « green-fuels »), en particulier un « biogaz », c'est à dire un gaz composé essentiellement de méthane et de dioxyde de carbone qui est produit par méthanisation.

Selon encore une autre alternative, le combustible utilisé dans tout ou partie du four 100 peut être de l'hydrogène (H2) qui, par comparaison à un biogaz, ne comporte avantageusement pas de carbone.

Dans son principe général, le four hybride 100 se distingue des fours hybrides de l'art antérieur en ce que la cuve 110 comporte d'amont en aval deux zones de chauffe, une première zone de chauffe Z_1 et une deuxième zone de chauffe Z_2, configurées pour mettre en œuvre une étape de fusion de matières vitrifiables du procédé de fabrication de verre selon l'invention (non illustré sur les figures).

L'exécution de l'étape de fusion de matières vitrifiables destinées à la fabrication dudit verre, lesdites matières vitrifiables contenant une proportion de matière organique carbonée comprise entre 0,5% et 10%, est réalisée de sorte que :
- la part d'énergie de combustion utilisée pour fondre des matières vitrifiables dans la première zone Z_1 est d'au moins 50% (i.e. l'énergie totale de fusion utilisée dans la première zone Z_1 pour fondre des matières vitrifiables comporte au moins 50% d'énergie de combustion), et
- la part d'énergie électrique utilisée pour fondre des matières vitrifiables dans la deuxième zone Z_2 est d'au moins 50 % (i.e. l'énergie totale de fusion utilisée dans la deuxième zone Z_2 pour fondre des matières vitrifiables comporte au moins 50% d'énergie électrique).

Plus particulièrement, dans le mode de réalisation décrit ici, les deux zones de chauffe Z_1, Z_2 sont en communication fluidique, sans qu'aucune barrière ne s'interpose entre elles.

En outre, chacune desdites zones de chauffe Z_1, Z_2 est avantageusement configurée pour permettre l'utilisation d'énergie de combustion ainsi que d'énergie électrique. Ainsi, et tel qu'illustré par la figure 1, la première zone de chauffe Z_1 comporte trois brûleurs aériens 130_1, 130_2, 130_3 ainsi que deux électrodes 140_1, 140_2. La deuxième zone de chauffe Z_2, quant à elle, comporte un seul brûleur aérien 150 ainsi que quatre électrodes 160_1, 160_2, 160_3, 160_4.

Les brûleurs 130_1, 130_2, 130_3, 150 sont des brûleurs dits transversaux, communément appelés ainsi en raison de leur agencement transversal, perpendiculairement à l'écoulement du verre dans le four 100.

Dans le mode de réalisation de la figure 1, les électrodes 140_1, 140_2, 160_1, 160_2, 160_3, 160_4 sont des électrodes dites montantes, communément appelées ainsi en raison de leur agencement vertical depuis la sole 111 de la cuve 110. Cela étant, rien n'exclut d'envisager qu'une ou plusieurs des électrodes aient une orientation différente, par exemple oblique.

Le fait de considérer un tel nombre de brûleurs et d'électrodes dans chacune des zones de chauffe Z_1, Z_2 ne constitue cependant qu'une variante d'implémentation de l'invention. D'une manière générale, aucune limitation n'est attachée aux nombres de brûleurs et d'électrodes dans chaque zone de chauffe dès lors que la part d'énergie de combustion (respectivement d'énergie électrique) utilisée dans la première zone Z_1 (respectivement dans la deuxième zone Z_2) est d'au moins 50%.

Mettre en œuvre l'étape de fusion d'un tel procédé de fabrication de verre au moyen du four hybride 100 permet donc de prioriser l'utilisation de l'énergie de combustion dans la première zone de chauffe Z_1 afin de limiter le phénomène de moussage dans ladite première zone de chauffe Z_1, et, inversement, de prioriser l'utilisation de l'énergie électrique dans la deuxième zone de chauffe Z_2, de manière à maximiser l'efficacité de chauffe (c'est-à-dire le transfert thermique ) de chacune desdites énergies utilisées dans le four 100.

En procédant ainsi, on diminue grandement le risque que le sulfate contenu dans les matières vitrifiables se désolubilise au voisinage d'électrodes de la première zone de chauffe Z_1 et puisse alors interagir avec les chaines carbonées également contenues dans les matières vitrifiables. Dit encore autrement, procéder de cette manière permet de limiter avantageusement le phénomène de moussage dans la première zone de chauffe Z_1, c'est-à-dire les conséquences de l'écran thermique formé par ladite mousse.

En conséquence, l'invention permet de maximiser l'efficacité de chauffe de chacune des énergies utilisées dans le four 100. En effet, l'apparition de mousse étant fortement limitée dans la première zone de chauffe Z_1, le problème d'une mauvaise transmission de chaleur entre le bain et les matières vitrifiables l'est également, ce qui favorise grandement la fusion des matières vitrifiables introduites dans la cuve 110.

Conformément à l'invention, la source d'énergie (de combustion ou électrique) n'est avantageusement jamais séparée de ce qu'elle doit chauffer par de la mousse grâce à quoi il est remédié aux inconvénients de l'art antérieur décrits en préambule liés à l'écrantage ou un écran thermique formé par ladite mousse.

En effet, la mousse - à tout le moins limitée dans la première zone de chauffe - ne remonte pas sur les matières vitrifiables à fondre et ce faisant ne forme plus un écran thermique de sorte que la fusion obtenue selon l'invention majoritairement au moyen des brûleurs n'est plus impactée. De la même manière dans la deuxième zone de chauffe où le chauffage et l'affinage sont assurés majoritairement au moyen des électrodes, l'éventuelle présence de mousse ne vient plus faire écran thermique avec la source d'énergie (électrique) comme cela était le cas dans l'art antérieur avec des brûleurs.

Dans la deuxième zone de chauffe Z_2, là où l'énergie utilisée est majoritairement électrique, le bain 120 ne contient alors quasiment plus de matières carbonées et de sulfate, si bien que le chauffage électrique a un rendement élevé sans risque de mauvais transfert de chaleur. Qui plus est, si un résidu de mousse est amené à se former en surface du bain 120 dans la deuxième zone de chauffe Z_2 (comme illustré par exemple sur la figure 1), ce dernier n'aura aucun effet délétère sur la production du verre. Au contraire, ce résidu de mousse forme alors un écran thermique vis-à-vis de la chaleur générée sous la surface du bain 120 par les électrodes, contribuant à la bonne isolation thermique dudit bain 120.

Selon un exemple plus particulier de mise en œuvre de l'étape de fusion, la part d'énergie de combustion utilisée pour fondre des matières vitrifiables dans la première zone est d'au moins 60%, et la part d'énergie électrique utilisée pour fondre des matières vitrifiables dans la deuxième zone est d'au moins 60 %.

Selon un exemple plus particulier de mise en œuvre de l'étape de fusion, la part d'énergie de combustion utilisée dans la première zone Z_1 est d'au moins 70%, par exemple la part d'énergie de combustion utilisée dans la première zone Z_1 est de 75% ou encore de 85%.

L'étape de fusion peut également être mise en œuvre de sorte que la part d'énergie électrique utilisée dans la première zone Z_1 permette d'y maintenir la température du bain au-dessus d'une température donnée, par exemple une température de dévitrification du verre.

D'une manière générale, aucune limitation n'est attachée à la proportion d'énergie de combustion utilisée dans la zone Z_1 dès lors que celle-ci est supérieure ou égale à 50%. Ainsi, rien n'exclut par exemple que l'énergie de fusion utilisée dans la première zone Z_1 soit uniquement une énergie de combustion (i.e. part d'énergie de combustion = 100%). A ce titre, on comprend que la présence d'électrodes dans la première zone de chauffe Z_1 n'est pas essentielle à l'invention.

Pour ce qui est de la deuxième zone de chauffe Z_2, en complément ou non des exemples précédents relatifs à la part d'énergie de combustion utilisée dans la première zone de chauffe Z_1, la part d'énergie d'électrique est d'au moins 70%, par exemple la part d'énergie électrique utilisée dans la deuxième zone Z_2 est de 75% ou encore de 85%.

Suivant un mode de mise en œuvre plus particulier, l'étape de fusion peut également être mise en œuvre de sorte que la part d'énergie de combustion utilisée dans la deuxième zone Z_2 permette d'y maintenir la température de la voûte au-dessus d'une température donnée.

A titre d'exemple, ladite température donnée correspond à une température de condensation du borate de soude, sensiblement de l'ordre de 1200 °C. Ce composé est en effet connu pour ses propriétés corrosives, et pour sa capacité à se condenser sur les parois de la voûte si la température au-dessus du bain 120 n'est pas suffisante.

D'une manière générale, aucune limitation n'est attachée à la proportion d'énergie électrique utilisée dans la deuxième zone Z_2 dès lors que celle-ci est supérieure ou égale à 50%. Ainsi, rien n'exclut par exemple que l'énergie de fusion utilisée dans la deuxième zone Z_2 soit uniquement une énergie électrique (i.e. part d'énergie électrique = 100%). A ce titre, on comprend que la présence de brûleurs dans la deuxième zone de chauffe Z_2 n'est pas essentielle à l'invention.

En complément, ou bien en alternative au fait de maintenir la température de la voûte au-dessus d'une température donnée via une modulation de l'énergie de combustion utilisée dans la deuxième zone de chauffe Z_2, le four peut également comporter une cheminée d'évacuation 180 configurée pour évacuer des fumées de combustion produites dans la première zone de chauffe Z_1 vers la deuxième zone de chauffe Z_2.

Avantageusement, la cheminée 180 est agencée ou reliée à la partie avale de la deuxième zone de chauffe Z_2. Aucune limitation n'est toutefois attachée à la configuration (forme, géométrie, agencement) de ladite cheminée 180, qui peut par exemple prendre la forme d'ouvertures pratiquées dans la voûte de la cuve 110 de sorte à former un passage d'évacuation des fumées.

Une telle cheminée 180, via l'évacuation des fumées dans la deuxième zone Z_2, permet également d'y maintenir la température au-dessus d'une température donnée, et peut donc également participer à éviter des effets de corrosion liés à une condensation du borate de soude sur la voûte du four 100.

Avantageusement, la circulation des fumées (issues de la première zone de chauffe Z_1) à travers la deuxième zone de chauffe Z_2 avant leur évacuation en aval par la cheminée 180 permet de maintenir une température de la voûte au-dessus d'une température donnée telle que celle de condensation du borate de soude, voire peut aussi permettre de supprimer le brûleur 130_4 ce qui est alors particulièrement favorable à un abaissement de la hauteur de voûte dans la deuxième zone de chauffe Z_2 du four 100.

Comme mentionné auparavant, l'étape de fusion du procédé de fabrication de verre selon l'invention permet de maximiser l'efficacité de chauffe de chacune des énergies utilisées dans le four 100. En conséquence, l'invention permet d'envisager une utilisation accrue de matières recyclées en comparaison avec ce qui est pratiqué dans l'état de la technique, de sorte à maximiser la capacité de recyclage du four 100.

Ainsi, selon un mode particulier de mise en œuvre de l'étape de fusion, la proportion de matière organique carbonée contenue dans les matières vitrifiables introduites dans la cuve 110 est inférieure ou égale à 10%.

Selon une caractéristique importante de l'invention, les matières vitrifiables destinées à la fabrication du verre contiennent une proportion de matière organique carbonée comprise entre 0,5% et 10%, préférentiellement comprise entre 0,75% et 10%, plus préférentiellement entre 1% et 10%, encore plus préférentiellement entre 2% et 10%.

Les matières vitrifiables destinées à la fabrication du verre peuvent par exemple comporter des matières recyclées, comme par exemple du calcin (exemple : calcin ménager, calcin d'usine, etc.), par exemple dans une proportion inférieure ou égale à 90%, et/ou de la laine minérale dans une proportion pouvant par exemple aller jusqu'à 100% (exemple : enfournement de matières vitrifiables correspondant à 100 % de laine de verre à recycler, celle-ci pouvant contenir jusqu'à 10 % de liant).

Le four 100 comporte une unité de commande UC pour piloter respectivement les moyens de chauffe par combustion 130_1, 130_2, 130_3 dans la première zone de chauffe Z_1 et les électrodes 160_1, 160_2, 160_3, 160_4 immergées dans le bain 120 de matières fondues dans la deuxième zone de chauffe Z_2 en fonction de la proportion de matière organique carbonée contenue dans les matières vitrifiables.

De préférence et selon un premier exemple, lors de l'étape de fusion, la part d'énergie de combustion utilisée pour fondre des matières vitrifiables dans la première zone de chauffe Z_1 est de 50%, et la part d'énergie électrique utilisée pour fondre des matières vitrifiables dans la deuxième zone de chauffe Z_2 est de 50 %, lorsque les matières vitrifiables contiennent une proportion de matière organique carbonée de l'ordre de 0,5%. Autrement dit, la part d'énergie de combustion et la part d'énergie électrique sont respectivement égale à 50% dans chacune desdites zones de chauffe Z_1 ; Z_2.

En variante, la part d'énergie de combustion et la part d'énergie électrique ne sont pas égales, par exemple la part d'énergie de combustion dans la première zone de chauffe Z_1 est de 50% et la part d'énergie électrique dans la deuxième zone de chauffe Z_2 est supérieure à 50%, par exemple égale à 70%, voire à 100%.

Bien entendu, la part d'énergie de combustion dans la première zone Z_1 pourrait en variante être aussi supérieure à la part d'énergie électrique dans la deuxième zone Z_2, notamment avec une part d'énergie électrique de 50% et une part d'énergie de combustion supérieure à 50%, par exemple égale à 70%, voire à 100%.

De préférence et selon un deuxième exemple, lors de l'étape de fusion, la part d'énergie de combustion utilisée pour fondre des matières vitrifiables dans la première zone de chauffe Z_1 est de 75%, et la part d'énergie électrique utilisée pour fondre des matières vitrifiables dans la deuxième zone de chauffe Z_2 est de 75 %, lorsque les matières vitrifiables contiennent une proportion de matière organique carbonée de l'ordre de 5%. Autrement dit, la part d'énergie de combustion et la part d'énergie électrique sont alors respectivement égale à 75% dans chacune desdites zones de chauffe Z_1 ; Z_2.

De préférence, lors de l'étape de fusion, la part d'énergie de combustion utilisée pour fondre des matières vitrifiables dans la première zone de chauffe Z_1 est de 100%, et la part d'énergie électrique utilisée pour fondre des matières vitrifiables dans la deuxième zone de chauffe Z_2 est de 100 %, lorsque les matières vitrifiables contiennent une proportion de matière organique carbonée égale à 10%.

Autrement dit, la part d'énergie de combustion et la part d'énergie électrique sont alors respectivement égale à 100% dans chacune desdites zones de chauffe Z_1 ; Z_2.

Selon les variantes qui viennent d'être décrites pour le premier exemple, la part d'énergie de combustion et la part d'énergie électrique peuvent être différentes pour le deuxième exemple ou le troisième exemple, l'une étant supérieure à l'autre ou inversement, chacune desdites part d'énergie étant d'au moins 50%.

Grâce à l'unité de commande UC, le four 100 est apte à être piloté en priorisant l'utilisation de l'énergie de combustion dans la première zone de chauffe Z_1 afin de limiter le phénomène de moussage dans ladite première zone de chauffe Z_1 et, inversement, l'utilisation de l'énergie électrique dans la deuxième zone de chauffe Z_2 de manière à maximiser l'efficacité de chauffe (c'est-à-dire le transfert thermique) de chacune desdites énergies utilisées dans le four 100.

On décrira ci-après, par comparaison avec le mode de réalisation illustré par la figure 1, d'autres modes de réalisation illustrés aux figures 2 à 5 dans lesquels l'unité de commande UC, ou encore la cheminée d'évacuation, n'ont pas été représentées mais uniquement pour simplifier, le four selon les figures 2 à 5 pouvant bien entendu comporter une unité de commande UC pour piloter la priorisation des énergies, voire une cheminée d'évacuation de fumées de combustion.

Le four hydride selon l'invention a été décrit jusqu'à présent en considérant une géométrie particulière selon laquelle aucune séparation physique n'existe entre les deux zones de chauffe Z_1, Z_2. D'autres alternatives de réalisation sont toutefois envisageables.

La figure 2 représente schématiquement, dans son environnement, un autre mode particulier de réalisation d'un four verrier 200 selon l'invention.

Suivant des dispositions similaires à celles décrites en référence à la figure 1, le four hybride 200 comporte une cuve 210 au sein de laquelle des matières vitrifiables destinées à la fabrication du verre sont fondues de sorte à obtenir un bain 220. Plus particulièrement, la cuve 220 comporte d'amont en aval deux zones de chauffe Z_1, Z_2, l'étape de fusion des matières vitrifiables étant réalisée au moyen de :
- trois brûleurs aériens 230_1, 230_2, 230_3 ainsi que deux électrodes 240_1, 240_2 dans la première zone de chauffe Z_1,
- un brûleur aérien 250 ainsi que quatre électrodes 260_1, 260_2, 260_3, 260_4 dans la deuxième zone de chauffe Z_2.

Par ailleurs, dans cet autre mode de réalisation, et tel qu'illustré à titre nullement limitatif par la figure 2, le four comporte une cloison verticale 270 configurée pour :
- bloquer, au niveau de la surface du bain de matières fondues 220, la circulation de matières fondues entre les première et deuxième zones Z_1, Z_2,
- laisser circuler, au niveau de la sole 211 du four 200, les matières fondues entre les première et deuxième zones Z_1, Z_2.

La cloison verticale 270 est par exemple réalisée en matériau réfractaire, par exemple à base de magnésie et/ou du chrome, ou bien de type Alumine-Zircone-Silice (électrofondu ou non).

Alternativement, la cloison verticale 270 peut comprendre une enveloppe métallique extérieure (encore dite « armature »), laquelle est formée de deux cloisons entre lesquelles circule un fluide de refroidissement, par exemple de l'eau (paroi dite « water jacket » dans la littérature anglo-saxonne).

En d'autres termes, la cloison verticale 270 est configurée pour créer une ouverture en partie basse du four 200, de sorte que les matières fondues dans la première zone de chauffe Z_1 puissent circuler vers la deuxième zone de chauffe Z_2, pour ensuite être évacuées en dehors du four 200.

Il est à noter que la capacité de la cloison 270 (du fait de sa hauteur adaptée) à bloquer, au niveau de la surface du bain de matières fondues 220, la circulation de matières fondues entre les zones Z_1, Z_2 permet avantageusement d'éviter que de la mousse apparue dans la deuxième zone de chauffe Z_2 puisse migrer vers la première zone de chauffe Z_1. Autrement dit, la présence de la cloison verticale 270 permet d'optimiser encore plus l'efficacité de chauffe du four hybride 200.

Comme mentionné auparavant, il est possible d'envisager que l'énergie de fusion utilisée dans la première zone Z_1 soit uniquement une énergie de combustion (i.e. part d'énergie de combustion = 100%). De telles dispositions sont avantageuses dans le cadre de cet autre mode de réalisation dans la mesure où elles favorisent la création de mouvements de convection dans le bain 220 de sorte à aider la circulation, au niveau de la sole 211 du four 200, les matières fondues entre les première et deuxième zones Z_1, Z_2.

Lorsque le four 200 comporte une cheminée d'évacuation de fumées analogue à celle 180 illustrée par la figure 1, la cloison verticale 270 est alors munie en partie haute d'au moins une ouverture (non représentée) pour permettre la circulation desdites fumées de la première zone de chauffe Z_1 vers la deuxième zone de chauffe Z_2, jusqu'à ladite cheminée d'évacuation agencée en aval.

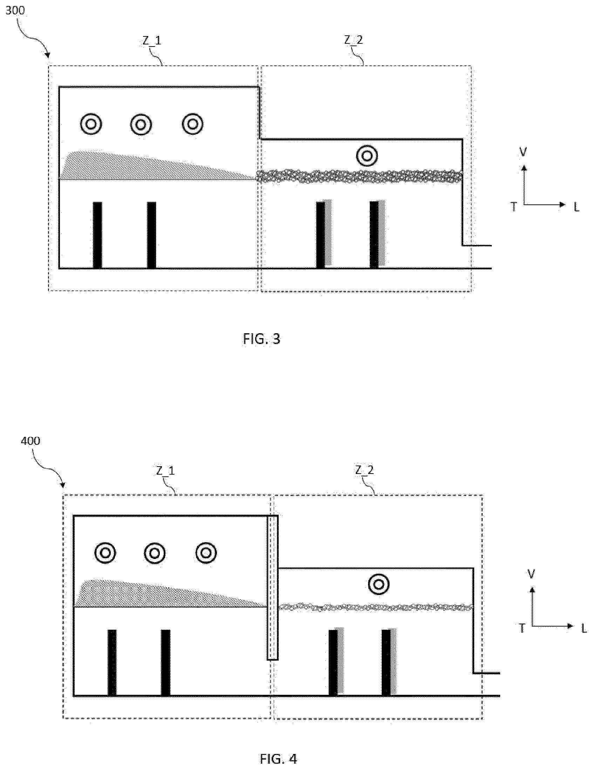

La figures 3 et 4 représentent schématiquement, dans son environnement, encore d'autres modes particuliers de réalisation de fours verriers 300, 400 selon l'invention.

Plus particulièrement, le four 300 (respectivement le four 400) diffère du four 100 de la figure 1 (respectivement du four 200 de la figure 2) en ce que la hauteur de voûte dans la deuxième zone de chauffe Z_2 est inférieure à la hauteur de voûte dans la première zone de chauffe Z_1.

Le four hybride selon l'invention a également été décrit jusqu'à présent en considérant que la hauteur de bain dans la première zone Z_1 est identique à la hauteur de bain dans la deuxième zone Z_2. De telles dispositions ne sont toutefois pas limitatives de l'invention, et rien n'exclut d'envisager des modes de réalisation dans lesquels la hauteur de bain dans la deuxième zone Z_2 est inférieure à la hauteur de bain dans la première zone Z_1. Tout en ayant une telle différence de hauteur de bain entre les zones Z_1 et Z_2, la hauteur minimale de bain dans la deuxième zone Z_2 peut par exemple être comprise entre 200 mm et 300 mm.

Le fait d'avoir une hauteur de verre plus faible dans la deuxième zone Z_2 permet avantageusement de diminuer le coût de construction du four, dans la mesure où la quantité de matériaux réfractaire est minimisée. En outre, cela permet de minimiser le besoin en énergie car le volume de verre à chauffer est moindre dès lors que les pertes thermiques à travers les parois réfractaires sont ainsi minimisées.

De manière préférée, lorsque la hauteur de bain dans la deuxième zone Z_2 est inférieure à la hauteur de bain dans la première zone Z_1, l'énergie de fusion utilisée dans la deuxième zone Z_2 est uniquement une énergie électrique, ce qui peut permettre d'envisager, pour la deuxième zone Z_2, une voûte dont la hauteur affleure la surface du bain.

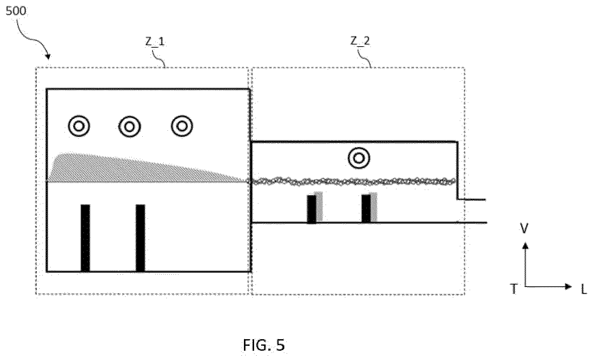

A titre nullement limitatif, la figure 5 représente schématiquement un autre mode de réalisation d'un four verrier hybride 500 selon l'invention, dans lequel la hauteur de bain dans la deuxième zone Z_2 est inférieure à la hauteur de bain dans la première zone Z_1. Comme cela peut être observé sur la figure 5, la hauteur de sole du four 500 diffère entre les zones Z_1 et Z_2, ce qui permet, dans ce mode de réalisation, d'obtenir la différence recherchée entre les hauteurs de bain.

Suivant encore un autre aspect, l'invention couvre également un procédé de fabrication de verre (non illustré en détail par les figures) qui, outre l'étape de fusion des matières vitrifiables, comporte par exemple une étape de mise en forme finale du verre pouvant être précédée, suivant des exemples plus particuliers de mises en œuvre, d'étapes d'affinage et/ou d'homogénéisation et/ou de conditionnement thermique à partir de la matière fondue qui s'écoule en dehors de la cuve.

## Revendications

1. Procédé de fabrication de verre comportant une étape de fusion de matières vitrifiables destinées à la fabrication dudit verre, lesdites matières vitrifiables contenant une proportion de matière organique carbonée comprise entre 0,5% et 10%, dans lequel l'étape de fusion des matières vitrifiables est mise en œuvre au moyen d'un four verrier hybride (100) comportant une cuve à voûte chaude (110), ladite cuve comportant d'amont en aval :
- une première zone de chauffe (Z_1) comprenant des moyens de chauffe par combustion (130_1, 130_2, 130_3),
- une deuxième zone de chauffe (Z_2) comprenant des électrodes (160_1, 160_2, 160_3, 160_4) immergées dans le bain (120) de matières fondues,
ladite étape de fusion étant mise en œuvre de sorte que la part d'énergie de combustion utilisée pour fondre des matières vitrifiables dans la première zone est d'au moins 50%, et la part d'énergie électrique utilisée pour fondre des matières vitrifiables dans la deuxième zone est d'au moins 50 % en priorisant l'utilisation de l'énergie de combustion dans la première zone de chauffe (Z_1) afin de limiter le phénomène de moussage dans ladite première zone de chauffe (Z_1) et, inversement, l'utilisation de l'énergie électrique dans la deuxième zone de chauffe (Z_2) de manière à maximiser l'efficacité de chauffe de chacune desdites énergies utilisées dans le four.

2. Procédé selon la revendication 1, dans lequel la part d'énergie de combustion utilisée dans la première zone (Z_1) est d'au moins 70%.

3. Procédé selon la revendication 2, dans lequel l'énergie de fusion utilisée dans la première zone (Z_1) est uniquement une énergie de combustion.

4. Procédé selon l'une quelconque des revendications 1 à 2, dans lequel la première zone de chauffe (Z_1) comportant également des électrodes (140_1, 140_2) immergées dans le bain de matières fondues, l'étape de fusion est mise en œuvre de sorte que la part d'énergie électrique utilisée dans la première zone (Z_1) permette d'y maintenir la température du bain au-dessus d'une température donnée, par exemple une température de dévitrification du verre.

5. Procédé selon l'une quelconque des revendications 1 à 4, dans lequel la part d'énergie électrique utilisée dans la deuxième zone (Z_2) est d'au moins 70%.

6. Procédé selon la revendication 5, dans lequel l'énergie de fusion utilisée dans la deuxième zone (Z_2) est uniquement une énergie électrique.

7. Procédé selon l'une quelconque des revendications 1 à 5, dans lequel la deuxième zone de chauffe (Z_2) comportant également des moyens de chauffe par combustion (130_4), l'étape de fusion est mise en œuvre de sorte que la part d'énergie de combustion utilisée dans la deuxième zone (Z_2) permette d'y maintenir la température de la voûte au-dessus d'une température donnée, par exemple une température de condensation du borate de soude.

8. Procédé selon l'une quelconque des revendications 1 à 7, dans lequel la part d'énergie de combustion utilisée dans la première zone (Z_1) et la part d'énergie électrique utilisée dans la deuxième zone (Z_2) sont égales ou différentes, l'une étant alors supérieure à l'autre ou inversement.

9. Procédé selon l'une quelconque des revendications 1 à 8, dans lequel l'énergie de combustion dans la première zone (Z_1) et/ou dans la deuxième zone (Z_2) est obtenue par combustion d'hydrogène.

10. Procédé selon l'une quelconque des revendications 1 à 9, dans lequel les matières vitrifiables sont choisies pour permettre la fabrication de verre borosilicaté.

11. Procédé selon l'une quelconque des revendications 1 à 10, dans lequel la proportion de matière organique carbonée contenue dans les matières vitrifiables, inférieure ou égale à 10%, est comprise entre 0,75% et 10%, plus préférentiellement entre 1% et 10%, encore plus préférentiellement entre 2% et 10%.

12. Procédé selon l'une quelconque des revendications 1 à 11, dans lequel les matières vitrifiables comportent des matières recyclées, comme par exemple du calcin, par exemple dans une proportion inférieure ou égale à 90%, et/ou de la laine minérale dans une proportion pouvant par exemple aller jusqu'à 100%.

13. Procédé selon l'une quelconque des revendications 1 à 12, dans lequel les fumées de combustion produites dans la première zone de chauffe (Z_1) sont évacuées vers la deuxième zone de chauffe (Z_2) jusqu'à une cheminée d'évacuation (180) agencée en aval dans ladite deuxième zone de chauffe (Z_2) de manière à permettre de maintenir, grâce auxdites fumées, la température de la voûte dans ladite deuxième zone de chauffe (Z_2) au-dessus d'une température donnée, notamment une température de condensation du borate de soude.

14. Four verrier hybride (100, 200, 300, 400, 500) configuré pour mettre en œuvre le procédé de fabrication de verre selon l'une quelconque des revendications 1 à 13, ledit four comportant une unité de commande (UC) pour piloter respectivement au moins les moyens de chauffe par combustion (130_1, 130_2, 130_3) dans la première zone de chauffe (Z_1) et les électrodes (160_1, 160_2, 160_3, 160_4) immergées dans le bain (120) de matières fondues dans la deuxième zone de chauffe (Z_2) en fonction de la proportion de matière organique carbonée contenue dans les matières vitrifiables, en priorisant l'utilisation de l'énergie de combustion dans la première zone de chauffe (Z_1) afin de limiter le phénomène de moussage dans ladite première zone de chauffe (Z_1) et, inversement, l'utilisation de l'énergie électrique dans la deuxième zone de chauffe (Z_2) de manière à maximiser l'efficacité de chauffe de chacune desdites énergies utilisées dans le four.

15. Four (200) selon la revendication 14, le four comportant une cloison verticale (270) configurée pour :
- bloquer, au niveau de la surface du bain de matières fondues, la circulation de matières fondues entre les première et deuxième zones (Z_1, Z_2),
- laisser circuler, au niveau de la sole (211) du four, les matières fondues entre les première et deuxième zones.

16. Four (300, 400) selon l'une quelconque des revendications 14 à 15, dans lequel la hauteur de voûte dans la deuxième zone de chauffe (Z_2) est inférieure à la hauteur de voûte dans la première zone de chauffe (Z_1).

17. Four (500) selon l'une quelconque des revendications 14 à 16, dans lequel la hauteur de bain dans la deuxième zone de chauffe (Z_2) est inférieure à la hauteur de bain dans la première zone de chauffe (Z_1).

18. Four selon l'une quelconque des revendications 14 à 17, le four comportant en outre une cheminée d'évacuation (180) qui, agencée dans une partie avale de la deuxième zone de chauffe (Z_2), est configurée pour évacuer des fumées de combustion produites dans la première zone de chauffe vers la deuxième zone de chauffe.

## Patentansprüche

1. Verfahren zur Herstellung von Glas, umfassend einen Schritt des Schmelzens von Glasrohstoffen, die zur Herstellung des Glases bestimmt sind, wobei die Glasrohstoffe einen Anteil an organischem kohlenstoffhaltigem Material im Bereich von 0,5 % bis 10 % enthalten, wobei der Schritt des Schmelzens der Glasrohstoffe mittels eines Hybrid-Glasofens (100) durchgeführt wird, der eine Wanne mit heißer Decke (110) umfasst, wobei die Wanne von stromaufwärtig nach stromabwärtig Folgendes umfasst:
- eine erste Heizzone (Z_1), umfassend Verbrennungsheizmittel (130_1, 130_2, 130_3),
- eine zweite Heizzone (Z_2), umfassend in das Schmelzbad (120) eingetauchte Elektroden (160_1, 160_2, 160_3, 160_4),
wobei der Schritt des Schmelzens so umgesetzt wird, dass der Anteil der Verbrennungsenergie, die zum Schmelzen von Glasrohstoffen in der ersten Zone verwendet wird, mindestens 50 % beträgt, und der Anteil der elektrischen Energie, die zum Schmelzen von Glasrohstoffen in der zweiten Zone verwendet wird, mindestens 50 % beträgt, wobei in der ersten Heizzone (Z_1) die Verwendung von Verbrennungsenergie priorisiert wird, um das Phänomen der Schaumbildung in der ersten Heizzone (Z_1) zu begrenzen, und umgekehrt, in der zweiten Heizzone (Z_2) die Verwendung von elektrischer Energie priorisiert wird, um die Heizeffizienz jeder der im Ofen verwendeten Energien zu maximieren.

2. Verfahren nach Anspruch 1, wobei der Anteil der in der ersten Zone (Z_1) verwendeten Verbrennungsenergie mindestens 70 % beträgt.

3. Verfahren nach Anspruch 2, wobei die in der ersten Zone (Z_1) verwendete Schmelzenergie ausschließlich eine Verbrennungsenergie ist.

4. Verfahren nach Anspruch 1 bis 2, wobei die erste Heizzone (Z_1) ebenfalls in das Bad aus geschmolzenem Material eingetauchte Elektroden umfasst (140_1, 140_2), wobei der Schmelzschritt so umgesetzt wird, dass der Anteil der elektrischen Energie, die in der ersten Zone (Z_1) verwendet wird, es ermöglicht, dort die Temperatur des Bades über einer gegebenen Temperatur, beispielsweise einer Entglasungstemperatur des Glases, zu halten.

5. Verfahren nach Anspruch 1 bis 4, wobei der Anteil der in der zweiten Zone (Z_2) verwendeten elektrischen Energie mindestens 70 % beträgt.

6. Verfahren nach Anspruch 5, wobei die in der zweiten Zone (Z_2) verwendete Schmelzenergie ausschließlich elektrische Energie ist.

7. Verfahren nach Anspruch 1 bis 5, wobei die zweite Heizzone (Z_2) ebenfalls Verbrennungsheizmittel (130_4) umfasst, der Schmelzschritt so umgesetzt wird, dass der Anteil der Verbrennungsenergie, die in der zweiten Zone (Z_2) verwendet wird, es ermöglicht, dort die Temperatur der Decke über einer gegebenen Temperatur, beispielsweise einer Kondensationstemperatur von Natriumborat, zu halten.

8. Verfahren nach einem der Ansprüche 1 bis 7, wobei der Anteil der Verbrennungsenergie, die in der ersten Zone (Z_1) verwendet wird, und der Anteil der elektrischen Energie, die in der zweiten Zone (Z_2) verwendet wird, gleich oder unterschiedlich sind, wobei der eine größer als der andere ist oder umgekehrt.

9. Verfahren nach einem der Ansprüche 1 bis 8, wobei die Verbrennungsenergie in der ersten Zone (Z_1) und/oder in der zweiten Zone (Z_2) durch die Verbrennung von Wasserstoff erhalten wird.

10. Verfahren nach einem der Ansprüche 1 bis 9, wobei die Glasrohstoffe derart ausgewählt werden, dass sie die Herstellung von Borosilikatglas ermöglichen.

11. Verfahren nach einem der Ansprüche 1 bis 10, wobei der Anteil des in den Glasrohstoffen enthaltenen organischen kohlenstoffhaltigen Materials, der kleiner oder gleich 10 % ist, im Bereich zwischen 0,75 % und 10 %, vorzugsweise zwischen 1 % und 10 % und noch bevorzugter zwischen 2 % und 10 % liegt.

12. Verfahren nach einem der Ansprüche 1 bis 11, wobei die Glasrohstoffe recycelte Materialien wie beispielsweise Glasbruch, beispielsweise in einem Anteil weniger als oder gleich 90 %, und/oder Mineralwolle in einem Anteil, der beispielsweise bis zu 100 % betragen kann, enthalten.

13. Verfahren nach einem der Ansprüche 1 bis 12, wobei die in der ersten Heizzone (Z_1) erzeugten Verbrennungsgase in die zweite Heizzone (Z_2) bis zu einem Abzugskamin (180), der stromabwärtig in der zweiten Heizzone (Z_2) angeordnet ist, derart abgeleitet werden, dass durch die Rauchgase die Temperatur der Decke in der zweiten Heizzone (Z_2) über einer gegebenen Temperatur, insbesondere einer Kondensationstemperatur von Natriumborat, gehalten werden kann.

14. Hybrid-Glasofen (100, 200, 300, 400, 500), der zur Umsetzung des Glasherstellungsverfahrens nach einem der Ansprüche 1 bis 13 konfiguriert ist, wobei der Ofen eine Steuereinheit (UC) umfasst, um jeweils mindestens die Verbrennungsheizmittel (130_1, 130_2, 130_3) in der ersten Heizzone (Z_1) und die in das Schmelzbad (120) eingetauchten Elektroden (160_1, 160_2, 160_3, 160_4) in der zweiten Heizzone (Z_2) in Abhängigkeit vom Anteil an organischem kohlenstoffhaltigem Material in den Glasrohstoffen zu steuern, indem in der ersten Heizzone (Z_1) die Verwendung von Verbrennungsenergie priorisiert wird, um das Phänomen der Schaumbildung in der genannten ersten Heizzone (Z_1) zu begrenzen, und umgekehrt, in der zweiten Heizzone (Z_2) die Verwendung von elektrischer Energie priorisiert wird, um die Heizeffizienz jeder der im Ofen verwendeten Energien zu maximieren.

15. Ofen (200) nach Anspruch 14, wobei der Ofen eine vertikale Trennwand (270) umfasst, die konfiguriert ist zum:
- Blockieren der Zirkulation von geschmolzenem Material zwischen der ersten und der zweiten Zone (Z_1, Z_2) im Bereich der Oberfläche des Schmelzbades,
- Zirkulierenlassen der geschmolzenen Materialien zwischen der ersten und der zweiten Zone im Bereich der Ofensohle (211).

16. Ofen (300, 400) nach einem der Ansprüche 14 bis 15, wobei die Deckenhöhe in der zweiten Heizzone (Z_2) geringer ist als die Deckenhöhe in der ersten Heizzone (Z_1).

17. Ofen (500) nach Anspruch 14 bis 16, wobei die Badhöhe in der zweiten Heizzone (Z_2) geringer ist als die Badhöhe in der ersten Heizzone (Z_1).

18. Ofen nach einem der Ansprüche 14 bis 17, wobei der Ofen ferner einen in einem zur zweiten Heizzone (Z_2) stromabwärtigen Teil angeordneten Abzugskamin (180) umfasst, der konfiguriert ist, um in der ersten Heizzone erzeugte Verbrennungsgase in die zweite Heizzone abzuleiten.

## Claims

1. A method for manufacturing glass, comprising a step of melting vitrifiable materials that are intended for the manufacture of said glass, said vitrifiable materials containing a proportion of carbon-containing organic matter of between 0.5% and 10%, wherein the step of melting the vitrifiable materials is implemented by means of a hybrid glass furnace (100) comprising a hot-top tank (110), said tank comprising, from upstream to downstream:
- a first heating zone (Z_1) comprising combustion heating means (130_1, 130_2, 130_3),
- a second heating zone (Z_2) comprising electrodes (160_1, 160_2, 160_3, 160_4) immersed in the bath (120) of molten materials,
said melting step being implemented such that the proportion of combustion energy used for melting vitrifiable materials in the first zone is at least 50% and the proportion of electrical energy used for melting vitrifiable materials in the second zone is at least 50%, prioritizing the use of the combustion energy in the first heating zone (Z_1) in order to limit foaming in said first heating zone (Z_1) and, conversely, the use of the electrical energy in the second heating zone (Z_2) so as to maximize the heating efficiency of each of said energies used in the furnace.

2. The method according to claim 1, wherein the proportion of combustion energy used in the first zone (Z_1) is at least 70%.

3. The method according to claim 2, wherein the melting energy used in the first zone (Z_1) is solely combustion energy.

4. The method according to any one of claims 1 to 2, wherein the first heating zone (Z_1) further comprises electrodes (140_1, 140_2) immersed in the bath of molten materials, the melting step is implemented so that the proportion of electrical energy used in the first zone (Z_1) enables the bath temperature there to be maintained above a given temperature, for example a glass devitrification temperature.

5. The method according to any one of claims 1 to 4, wherein the proportion of electrical energy used in the second zone (Z_2) is at least 70%.

6. The method according to claim 5, wherein the melting energy used in the second zone (Z_2) is solely electrical energy.

7. The method according to any one of claims 1 to 5, wherein the second heating zone (Z_2) further comprises combustion heating means (130_4), the melting step being implemented in such a way that the proportion of combustion energy used in the second zone (Z_2) enables the temperature there of the crown to be maintained above a given temperature, for example a sodium borate condensation temperature.

8. The method according to any one of claims 1 to 7, wherein the proportion of combustion energy used in the first zone (Z_1) and the proportion of electrical energy used in the second zone (Z_2) are equal or different, one being greater than the other or vice versa.

9. The method according to any one of claims 1 to 8, wherein the combustion energy in the first zone (Z_1) and/or in the second zone (Z_2) is obtained by hydrogen combustion.

10. The method according to any one of claims 1 to 9, wherein the vitrifiable materials are chosen to enable the manufacture of borosilicate glass.

11. The method according to any one of claims 1 to 10, wherein the proportion of carbonaceous organic matter contained in the vitrifiable materials, less than or equal to 10%, is between 0.75% and 10%, more preferentially between 1% and 10%, even more preferentially between 2% and 10%.

12. The method according to any one of claims 1 to 11, wherein the vitrifiable materials comprise recycled materials, such as cullet, for example in a proportion less than or equal to 90%, and/or mineral wool in a proportion less than or equal to 100%.

13. The method according to any one of claims 1 to 12, wherein the combustion fumes produced in the first heating zone (Z_1) are discharged towards the second heating zone (Z_2) as far as an exhaust chimney (180) arranged downstream in said second heating zone (Z_2) so as to enable the temperature of the crown in said second heating zone (Z_2) to be maintained above a given temperature, in particular a sodium borate condensation temperature, by means of said fumes.

14. A hybrid glass furnace (100, 200, 300, 400, 500) configured to implement the method for manufacturing glass, according to any one of claims 1 to 13, said furnace comprising a control unit (UC) for respectively controlling at least the combustion heating means (130_1, 130_2, 130_3) in the first heating zone (Z_1) and the electrodes (160_1, 160_2, 160_3, 160_4) immersed in the bath (120) of molten materials in the second heating zone (Z_2) on the basis of the proportion of carbonaceous organic matter contained in the vitrifiable materials, prioritizing the use of the combustion energy in the first heating zone (Z_1) in order to limit foaming in said first heating zone (Z_1) and, conversely, the use of the electrical energy in the second heating zone (Z_2) so as to maximize the heating efficiency of each of said energies used in the furnace.

15. The furnace (200) according to claim 14, the furnace comprising a vertical partition (270) configured to:
- block the flow of melt between the first and second zones (Z_1, Z_2) on the surface of the bath of molten materials,
- allow melt to circulate between the first and second zones on the hearth (211) of the furnace.

16. The furnace (300, 400) according to any one of claims 14 to 15, wherein the crown height in the second heating zone (Z_2) is lower than the crown height in the first heating zone (Z_1).

17. The furnace (500) according to any one of claims 14 to 16, wherein the bath height in the second heating zone (Z_2) is lower than the bath height in the first heating zone (Z_1).

18. The furnace according to any one of claims 14 to 17, the furnace further comprising an exhaust chimney (180) which, arranged in a downstream portion of the second heating zone (Z_2), is configured to discharge combustion fumes produced in the first heating zone to the second heating zone.
